(19) Europäisches Patentamt / European Patent Office / Office européen des brevets

(11) **EP 3 933 296 A1**

(12) **EUROPEAN PATENT APPLICATION**
published in accordance with Art. 153(4) EPC

(43) Date of publication:
**05.01.2022 Bulletin 2022/01**

(51) Int Cl.:
**F25B 1/00** (2006.01)

(21) Application number: **19916622.4**

(22) Date of filing: **28.02.2019**

(86) International application number:
**PCT/JP2019/007914**

(87) International publication number:
**WO 2020/174677 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **ISHIYAMA, Hiroki**
  **Tokyo 100-8310 (JP)**
• **SHIMAZU, Yusuke**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **REFRIGERATION CYCLE DEVICE**

(57)     A refrigerant circuit (80) includes a compressor (1), a high-pressure side heat exchanger (2), a decompressor (3), and a low-pressure side heat exchanger (4), which are annularly connected by a refrigerant pipe (81), and is configured to circulate refrigerant. The refrigerant circuit (80) is configured to perform an oil recovery operation based on an operation history of the compressor (1) during a normal operation of the refrigerant circuit (80) and a property of the refrigerant circuit (80). The property of the refrigerant circuit (80) includes at least one selected from the group of a length of the refrigerant pipe (81), a height difference of the refrigerant pipe (81), and an outside air temperature.

FIG.2

# Description

## TECHNICAL FIELD

The present invention relates to a refrigeration cycle apparatus.

## BACKGROUND ART

There is known a refrigeration cycle apparatus having a function of performing an oil return operation so as to return lubricating oil to a compressor. For example, the refrigeration cycle apparatus described in PTL 1 has a function of determining that the compressor is operated at a low capacity where it is necessary to perform an oil return operation so as to return oil to the compressor and counting the operation time at the low capacity, a function of counting the number of start/stop times of the compressor, and a function of performing an oil return operation when the total operation time of the compressor at the low capacity is longer than a preset total operation time and the number of start/stop times of the compressor is greater than a preset number of start/stop times.

## CITATION LIST

### PATENT LITERATURE

PTL 1: Japanese Patent Laying-Open No. 2016-194389

## SUMMARY OF INVENTION

### TECHNICAL PROBLEM

However, in the refrigeration cycle apparatus described in PTL 1, the preset total operation time and the preset number of start/stop times are constant. Therefore, depending on the state of the refrigeration cycle apparatus, a property of the refrigerant circuit or the like, the oil return operation is performed even when an oil depletion does not occur. As a result, the comfort provided by the refrigeration cycle apparatus and the performance of the refrigeration cycle apparatus may be deteriorated.

Therefore, it is an object of the present invention to provide a refrigeration cycle apparatus which performs an oil return operation when the possibility for an oil depletion to occur is high.

### SOLUTION TO PROBLEM

The refrigeration cycle apparatus of the present invention includes a refrigerant circuit. The refrigerant circuit includes a compressor, a high-pressure side heat exchanger, a decompressor, and a low-pressure side heat exchanger, which are annularly connected by a refrigerant pipe, and is configured to circulate refrigerant.

The refrigerant circuit is configured to perform an oil recovery operation based on an operation history of the compressor during a normal operation of the refrigerant circuit and a property of the refrigerant circuit. The property of the refrigerant circuit includes at least one selected from the group of a length of the refrigerant pipe, a height difference of the refrigerant pipe, and an outside air temperature.

## ADVANTAGEOUS EFFECTS OF INVENTION

According to the present invention, the refrigerant circuit performs the oil recovery operation based on an operation history of the compressor during the normal operation of the refrigerant circuit and a property of the refrigerant circuit. Thus, the oil return operation is performed when the possibility for an oil depletion to occur is high.

## BRIEF DESCRIPTION OF DRAWINGS

Fig. 1 is a diagram illustrating a configuration of a refrigeration cycle apparatus according to a first embodiment;
Fig. 2 is a flowchart illustrating a control process of the refrigeration cycle apparatus according to the first embodiment;
Fig. 3 is a flowchart illustrating a control process of a refrigeration cycle apparatus according to a second embodiment;
Fig. 4 is a flowchart illustrating a control process of a refrigeration cycle apparatus according to a third embodiment;
Fig. 5 is a flowchart illustrating a control process of a refrigeration cycle apparatus according to a fourth embodiment;
Fig. 6 is a flowchart illustrating a control process of a refrigeration cycle apparatus according to a fifth embodiment;
Fig. 7 is a flowchart illustrating a control process of a refrigeration cycle apparatus according to a sixth embodiment;
Fig. 8 is a diagram illustrating a configuration of a refrigeration cycle apparatus according to a seventh embodiment;
Fig. 9 is a flowchart illustrating a control process of the refrigeration cycle apparatus according to the seventh embodiment;
Fig. 10 is a flowchart illustrating a control process of a refrigeration cycle apparatus according to an eighth embodiment;
Fig. 11 is a flowchart illustrating a control process of a refrigeration cycle apparatus according to a ninth embodiment; and
Fig. 12 is a flowchart illustrating a control process of a refrigeration cycle apparatus according to a tenth embodiment.

DESCRIPTION OF EMBODIMENTS

Hereinafter, embodiments will be described with reference to the drawings.

First Embodiment

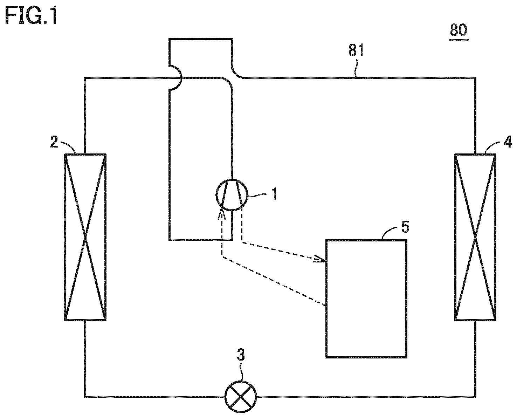

Fig. 1 is a diagram illustrating a configuration of a refrigeration cycle apparatus according to a first embodiment.

The refrigeration cycle apparatus includes a refrigerant circuit 80 and a controller 5.

The refrigerant circuit 80 includes a compressor 1, a high-pressure side heat exchanger 2, a decompressor 3, and a low-pressure side heat exchanger 4, which are annularly connected by a refrigerant pipe 81.

The refrigerant circuit 80 is configured to circulate refrigerant. The compressor 1 is configured to allow capacity control. The compressor 1 sucks in low pressure refrigerant, compresses the low pressure refrigerant into high pressure refrigerant, and discharges the high pressure refrigerant. The high-pressure side heat exchanger 2 functions as a condenser. The high-pressure side heat exchanger 2 condenses the high pressure refrigerant compressed by the compressor 1. The decompressor 3 depressurizes the high pressure refrigerant condensed by the high-pressure side heat exchanger 2. The low-pressure side heat exchanger 4 functions as an evaporator. The low-pressure side heat exchanger 4 evaporates the refrigerant depressurized by the decompressor 3.

The refrigerant circuit 80 is sealed with refrigeration oil. In the following description, the refrigerator oil is simply referred to as oil. The refrigerant circuit 80 is controlled to perform either a normal operation or an oil recovery operation.

(Normal Operation)

The liquid mixture of refrigerant and oil discharged from the compressor 1 flows through the high-pressure side heat exchanger 2, the decompressor 3 and the low-pressure side heat exchanger 4 in this order into the compressor 1. In the normal operation, since the amount of the liquid mixture discharged from the compressor 1 increases abruptly at the start of the compressor 1, the frequency of the compressor 1 decreases for a short time. As a result, the liquid mixture remains in the high-pressure side heat exchanger 2, the decompressor 3, the low-pressure side heat exchanger 4 and the refrigerant pipe 81, whereby the amount of the liquid mixture flowing into the compressor 1 decreases. After the compressor 1 is finally stopped, the liquid mixture in the refrigerant circuit 80 flows according to a pressure difference in the refrigerant circuit 80. Therefore, during the normal operation, in one cycle from the start to the stop of the compressor 1, although the outflow amount of oil from the compressor 1 increases, the inflow amount (the oil return amount) decreases. As the compressor 1 performs such intermittent operation repeatedly, the amount of oil in the compressor 1 will decrease. During the normal operation of the refrigerant circuit 80, the compressor 1 is repeatedly started and stopped. A total operation time Tt of the compressor 1 during the normal operation of the refrigerant circuit 80 is the sum of the operation time of the compressor 1 during the normal operation of the refrigerant circuit 80. When the time from the start to the stop of the compressor 1 is defined as a cycle time, the total operation time Tt is the sum of one or more cycle times during the normal operation of the refrigerant circuit 80. The number of start/stop times Nt of the compressor 1 during the normal operation of the refrigerant circuit 80 is the sum of the number of start times where the compressor 1 is started and the number of stop times where the compressor 1 is stopped during the normal operation of the refrigerant circuit 80.

(Oil Recovery Operation)

During the normal operation, the oil remains in each component of the refrigerant circuit 80. In an oil recovery operation, for example, the frequency of the compressor 1 is increased greater than the frequency thereof during the normal operation, or the opening degree of the decompressor 3 is increased. As a result, the oil flows out from each component of the refrigerant circuit 80, and thereby, the amount of oil flowing into the compressor 1 (the oil return amount) increases.

The controller 5 controls the oil recovery operation of the refrigerant circuit 80 based on an operation history of the compressor 1 during the normal operation of the refrigerant circuit 80 and a property of the refrigerant circuit 80.

The property of the refrigerant circuit 80 include at least one selected from the group of a length of the refrigerant pipe 81, a height difference of the refrigerant pipe 81, and an outside air temperature. The length of the refrigerant pipe 81 refers to the entire length of the refrigerant pipe 81. The height difference of the refrigerant pipe 81 refers to a difference between the highest position of the refrigerant pipe 81 and the lowest position of the refrigerant pipe 81. The outside air temperature refers to the temperature of air outside the refrigerant circuit 80.

Specifically, in the present embodiment, the controller 5 controls the refrigerant circuit 80 to perform the oil recovery operation when the total operation time Tt of the compressor 1 during the normal operation of the refrigerant circuit 80 is longer than a reference time Tth determined in accordance with a property of the refrigerant circuit 80.

The controller 5 may set the reference time Tth smaller as the length of the refrigerant pipe 81 becomes longer. Alternatively, the controller 5 may set the reference time Tth to A1 when the length of the refrigerant pipe 81 is equal to or longer than a prescribed length, and set the reference time Tth to B1 when the length of the refrigerant pipe 81 is smaller than the prescribed length (A1 < B1).

Alternatively, the controller 5 may set the reference time Tth smaller as the height difference of the refrigerant pipe 81 becomes greater. Alternatively, the controller 5 may set the reference time Tth to C1 when the height difference of the refrigerant pipe 81 is equal to or greater than a prescribed value, and set the reference time Tth to D1 when the height difference of the refrigerant pipe 81 is smaller than the prescribed value (C1 < D1).

Alternatively, the controller 5 may set the reference time Tth smaller as the outside air temperature becomes lower. Alternatively, the controller 5 may set the reference time Tth to E1 when the outside air temperature is equal to or higher than a prescribed temperature, and may set the reference time Tth to F1 when the outside air temperature is lower than the prescribed temperature (E1 > F1).

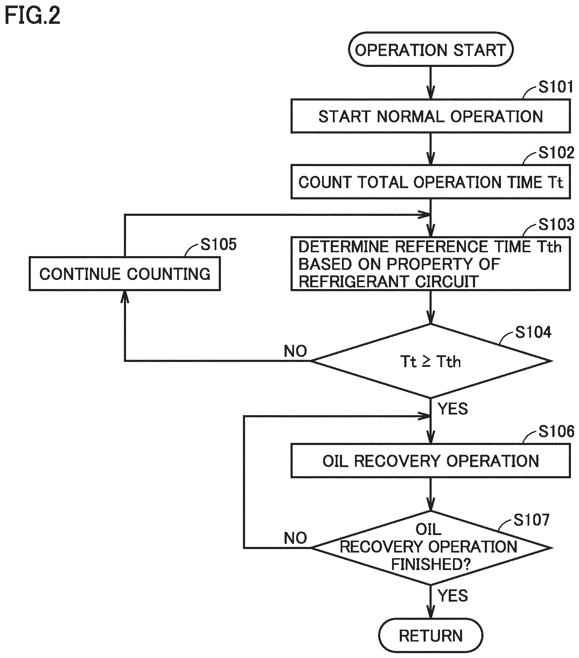

Fig. 2 is a flowchart illustrating a control process of the refrigeration cycle apparatus according to the first embodiment.

In step S101, the controller 5 starts a normal operation of the refrigerant circuit 80.

In step S102, the controller 5 counts the total operation time Tt of the compressor 1 from the start of the normal operation of the refrigerant circuit 80.

In step S103, the controller 5 calculates the reference time Tth based on a property of the refrigerant circuit 80.

In step S104, if Tt < Tth, the process proceeds to step S105; and if Tt ≥ Tth, the process proceeds to step S106.

In step S105, the controller 5 continues counting the total operation time Tt.

In step S106, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

When the oil recovery operation of the refrigerant circuit 80 is finished in step S107, the process is ended.

As described above, according to the present embodiment, when the necessity of the oil recovery operation is low (for example, when the refrigerant pipe 81 is short, or the total operation time is small), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long and the total operation time is great), the oil recovery operation is performed, which makes it possible to improve the reliability of the compressor.

Second Embodiment

Specifically, in the present embodiment, the controller 5 controls the refrigerant circuit 80 to perform an oil recovery operation when the number of start/stop times Nt of the compressor 1 during the normal operation of the refrigerant circuit 80 is greater than a reference number of times Nth determined in accordance with a property of the refrigerant circuit 80.

The controller 5 may set the reference number of times Nth smaller as the length of the refrigerant pipe 81 becomes longer. Alternatively, the controller 5 may set the reference number of times Nth to A2 when the length of the refrigerant pipe 81 is equal to or longer than a prescribed length, and set the reference number of times Nth to B2 when the length of the refrigerant pipe 81 is smaller than the prescribed length (A2 < B2).

Alternatively, the controller 5 may set the reference number of times Nth smaller as the height difference of the refrigerant pipe 81 becomes greater. Alternatively, the controller 5 may set the reference number of times Nth to C2 when the height difference of the refrigerant pipe 81 is equal to or greater than a prescribed value, and set the reference number of times Nth to D2 when the height difference of the refrigerant pipe 81 is smaller than the prescribed value (C2 < D2).

Alternatively, the controller 5 may set the reference number of times Nth smaller as the outside air temperature becomes lower. Alternatively, the controller 5 may set the reference number of times Nth to E2 when the outside air temperature is equal to or higher than a prescribed temperature, and may set the reference number of times Nth to F2 when the outside air temperature is lower than the prescribed temperature (E2 > F2).

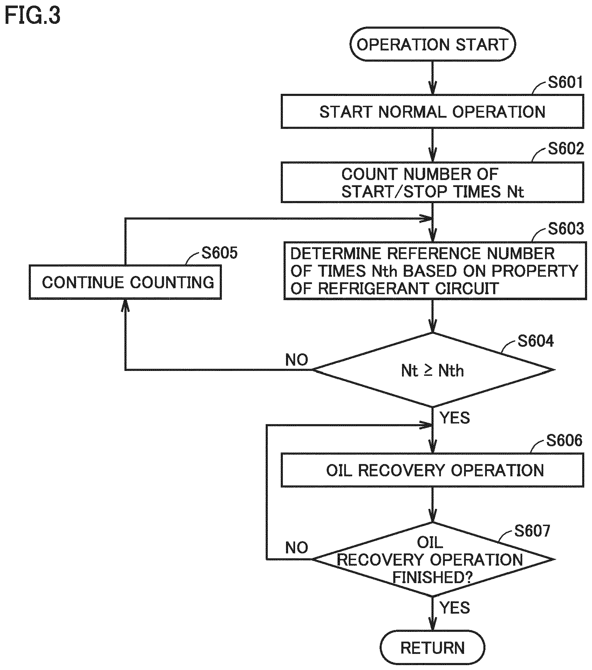

Fig. 3 is a flowchart illustrating a control process of the refrigeration cycle apparatus according to the second embodiment.

In step S601, the controller 5 starts a normal operation of the refrigerant circuit 80.

In step S602, the controller 5 counts the number of start/stop times Nt of the compressor 1 from the start of the normal operation of the refrigerant circuit 80.

In step S603, the controller 5 calculates the reference number of times Nth based on a property of the refrigerant circuit 80.

In step S604, if Nt < Nth, the process proceeds to step S105; and if Nt ≥ Nth, the process proceeds to step S106.

In step S605, the controller 5 continues counting the number of start/stop times Nt.

In step S606, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

When the oil recovery operation of the refrigerant circuit 80 is finished in step S607, the process is ended.

As described above, according to the present embodiment, when the necessity of the oil recovery operation is low (for example, when the refrigerant pipe 81 is short or the number of start/stop times of the compressor 1 is small), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long and the number of start/stop times of the compressor 1 is great), the oil recovery operation is performed, which makes it possible to improve the reliability of the compressor.

Third Embodiment

In the present embodiment, the controller 5 calculates an oil return time To for the oil discharged from the compressor 1 to return to the compressor 1.

For example, the controller 5 calculates the oil return time To according to the following formula:

$$\text{Voil} = f \times \text{Vst} \times \rho s \times \varphi \qquad (1)$$

$$\text{To} = \text{Lt} / \text{Voil} \qquad (2)$$

wherein Voil represents a flowing speed of oil, f represents a frequency of the compressor 1, Vst represents a stroke volume of the compressor 1, ps represents a density of the sucted refrigerant, $\varphi$ represents an oil circulation rate, and Lt represents a total length of the refrigerant pipe 81.

The controller 5 controls the refrigerant circuit 80 to perform an oil recovery operation when one cycle time Tc from the start to the stop of the compressor 1 is shorter than the oil return time To and the total operation time Tt of the compressor 1 during the normal operation of the refrigerant circuit 80 is longer than the reference time Tth determined in accordance with a property of the refrigerant circuit 80. When one cycle time Tc is equal to or longer than the oil return time To, the controller 5 resets the total operation time Tt to 0.

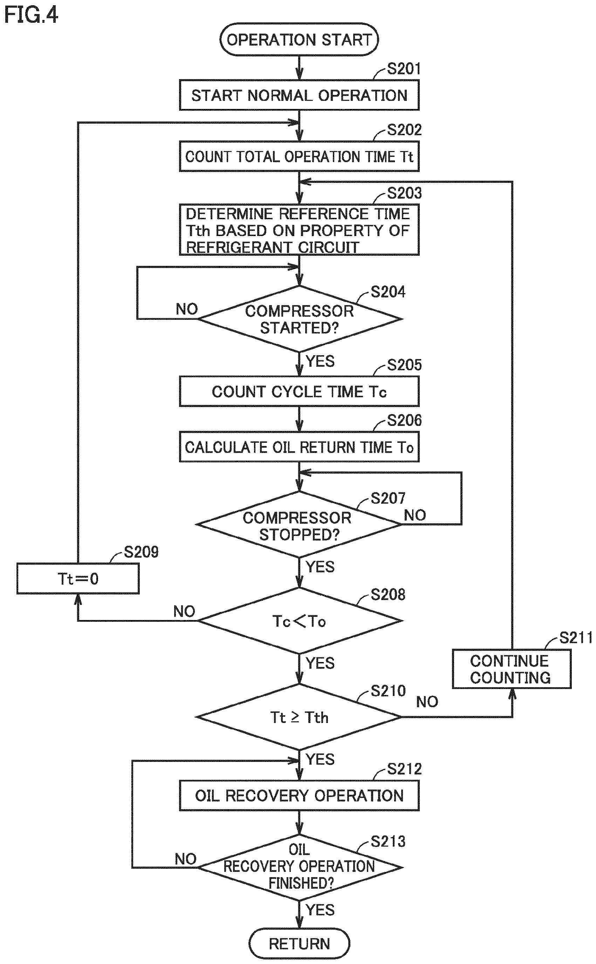

Fig. 4 is a flowchart illustrating a control process of the refrigeration cycle apparatus according to the third embodiment.

In step S201, the controller 5 starts a normal operation of the refrigerant circuit 80.

In step S202, the controller 5 counts the total operation time Tt of the compressor 1 from the start of the normal operation of the refrigerant circuit 80.

In step S203, the controller 5 calculates the reference time Tth based on a property of the refrigerant circuit 80.

If the compressor 1 is started in step S204, the process proceeds to step S205.

In step S205, the controller 5 counts the cycle time Tc.

In step S206, the controller 5 calculates the oil return time To.

If the compressor 1 is stopped in step S207, the process proceeds to step S208.

In step S208, if the cycle time Tc is shorter than the oil return time To, the process proceeds to step S210; and if the cycle time Tc is equal to or longer than the oil return time To, the process proceeds to step S209.

In step S209, the controller 5 resets the cycle time Tc to 0.

In step S210, if Tt < Tth, the process proceeds to step S211; and if Tt ≥ Tth, the process proceeds to step S212.

In step S211, the controller 5 continues counting the total operation time Tt.

In step S212, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

When the oil recovery operation of the refrigerant circuit 80 is finished in step S213, the process is ended.

As described above, according to the present embodiment, when the necessity of the oil recovery operation is low (for example, when the refrigerant pipe 81 is short, the total operation time of the compressor 1 is small, or the cycle time is longer than the oil return time), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long, the total operation time of the compressor 1 is great, and the cycle time is shorter than the oil return time), the oil recovery operation is performed, which makes it possible to improve the reliability of the compressor.

In the above embodiment, in step S203, the controller 5 determines the reference time Tth based on a property of the refrigerant circuit 80, but it is not limited thereto. The controller 5 may set the reference time Tth to a predetermined value irrespective of a property of the refrigerant circuit 80.

Fourth Embodiment

In the present embodiment, the controller 5 calculates the oil return time To for the oil discharged from the compressor 1 to return to the compressor 1 in the same manner as in the third embodiment.

In the present embodiment, the controller 5 controls the refrigerant circuit 80 to perform an oil recovery operation when one cycle time Tc from the start of the compressor 1 to the stop of the compressor 1 is shorter than the oil return time To and the number of start/stop times Nt of the compressor 1 during the normal operation of the refrigerant circuit 80 is greater than the reference number of times Nth determined in accordance with a property of the refrigerant circuit 80. When one cycle time Tc is equal to or longer than the oil return time To, the controller 5 resets the number of start/stop times Nt to 0.

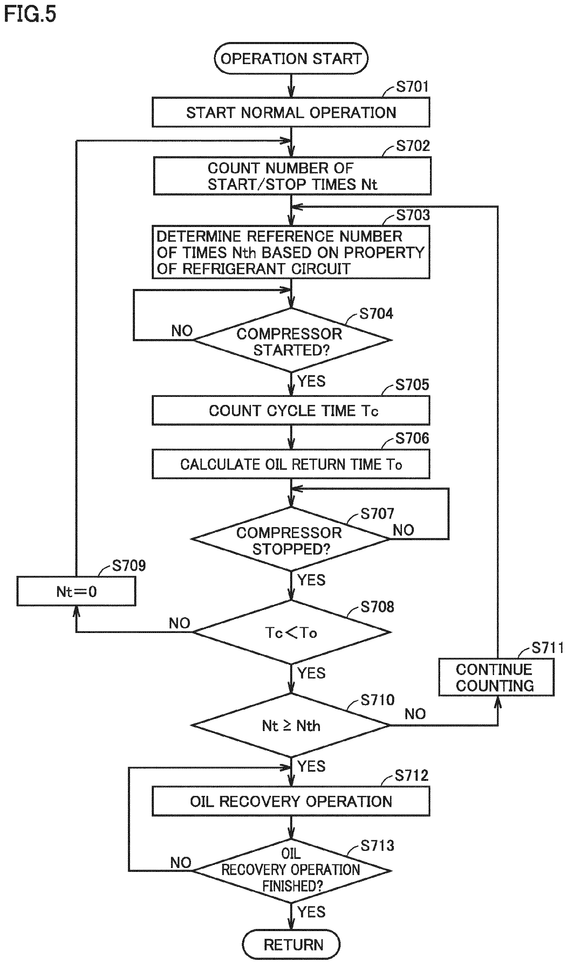

Fig. 5 is a flowchart illustrating a control process of the refrigeration cycle apparatus according to the fourth embodiment.

In step S701, the controller 5 starts a normal operation of the refrigerant circuit 80.

In step S702, the controller 5 counts the number of start/stop times Nt of the compressor 1 from the start of the normal operation of the refrigerant circuit 80.

In step S703, the controller 5 calculates the reference number of times Nth based on a property of the refrigerant circuit 80.

If the compressor 1 is started in step S704, the process proceeds to step S705.

In step S705, the controller 5 counts the cycle time Tc.

In step S706, the controller 5 calculates the oil return time To.

If the compressor 1 is stopped in step S707, the process proceeds to step S708.

In step S708, if the cycle time Tc is shorter than the oil return time To, the process proceeds to step S710; and if the cycle time Tc is equal to or longer than the oil return time To, the process proceeds to step S709.

In step S709, the controller 5 resets the number of start/stop times Nt to 0.

In step S710, if Nt < Nth, the process proceeds to step S711; and if Nt ≥ Nth, the process proceeds to step S712.

In step S711, the controller 5 continues counting the number of start/stop times Nt.

In step S712, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

When the oil recovery operation of the refrigerant circuit 80 is finished in step S713, the process is ended.

As described above, according to the present embodiment, when the necessity of the oil recovery operation is low (for example, when the refrigerant pipe 81 is short, the number of start/stop times of the compressor 1 is small, or the cycle time is equal to or longer than the oil return time), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long, the number of start/stop times of the compressor 1 is great and the cycle time is shorter than the oil return time), the oil recovery operation is performed, which makes it possible to improve the reliability of the compressor.

In the above embodiment, in step S703, the controller 5 determines the reference number of times Nth based on a property of the refrigerant circuit 80, but it is not limited thereto. The controller 5 may set the reference number Nth to a predetermined value irrespective of a property of the refrigerant circuit 80.

Fifth Embodiment

In the present embodiment, the controller 5 calculates the oil return time To for the oil discharged from the compressor 1 to return to the compressor 1 in the same manner as in the third embodiment.

In the present embodiment, the controller 5 terminates the oil recovery operation of the refrigerant circuit 80 when an oil recovery operation time is equal to or longer than the oil return time To during the oil recovery operation of the refrigerant circuit 80 according to the first embodiment.

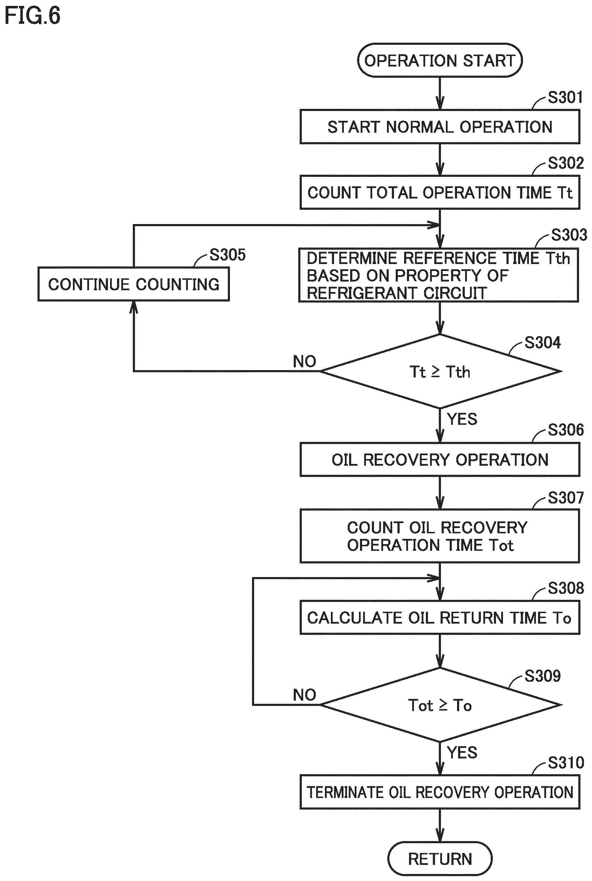

Fig. 6 is a flowchart illustrating a control process of the refrigeration cycle apparatus according to the fifth embodiment.

In step S301, the controller 5 starts a normal operation of the refrigerant circuit 80.

In step S302, the controller 5 counts the total operation time Tt of the compressor 1 from the start of the normal operation of the refrigerant circuit 80.

In step S303, the controller 5 calculates the reference time Tth based on a property of the refrigerant circuit 80.

In step S304, if Tt < Tth, the process proceeds to step S305; and if Tt ≥ Tth, the process proceeds to step S306.

In step S305, the controller 5 continues counting the total operation time Tt.

In step S306, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

In step S307, the controller 5 counts an oil recovery operation time Tot.

In step S308, the controller 5 calculates the oil return time To.

In step S309, if Tot < To, the process returns to step S308; and if Tot ≥ To, the process proceeds to step S310.

In step S310, the controller 5 terminates the oil recovery operation of the refrigerant circuit 80.

As described above, according to the present embodiment, during the oil recovery operation of the refrigerant circuit 80 according the first embodiment, the oil recovery operation may be terminated at an appropriate timing based on the oil return time, which makes it possible to improve the comfort provided by the refrigeration cycle apparatus and the performance of the compressor.

In the above embodiment, in step S303, the controller 5 determines the reference time Tth based on a property of the refrigerant circuit 80, but it is not limited thereto. The controller 5 may set the reference time Tth to a predetermined value irrespective of a property of the refrigerant circuit 80.

Sixth Embodiment

In the present embodiment, the controller 5 calculates the oil return time To for the oil discharged from the compressor 1 to return to the compressor 1 in the same manner as in the third embodiment.

In the present embodiment, the controller 5 terminates the oil recovery operation of the refrigerant circuit 80 when the oil recovery operation time is equal to or longer than the oil return time To during the oil recovery operation of the refrigerant circuit 80 according to the second embodiment.

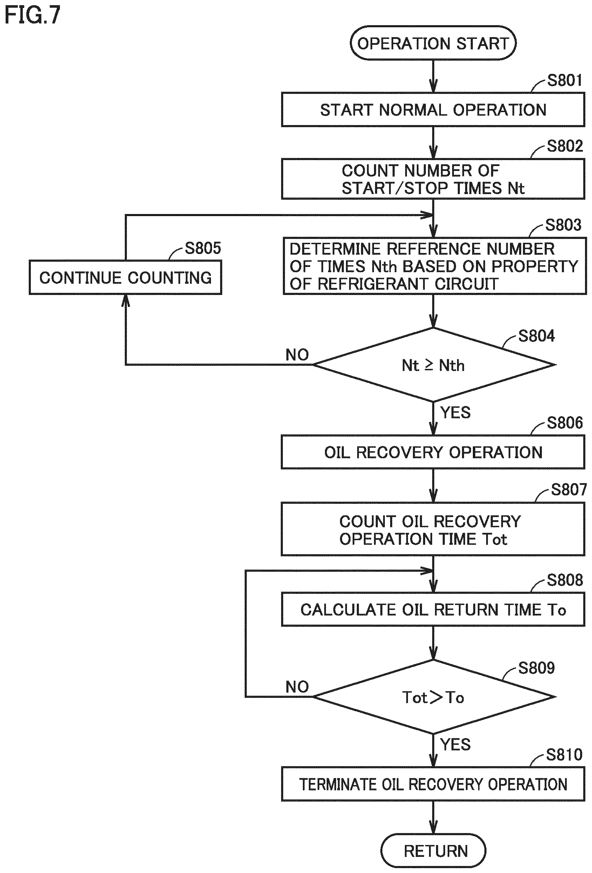

Fig. 7 is a flowchart illustrating a control process of a refrigeration cycle apparatus according to a sixth embodiment.

In step S801, the controller 5 starts a normal operation of the refrigerant circuit 80.

In step S802, the controller 5 counts the number of start/stop times Nt of the compressor 1 from the start of the normal operation of the refrigerant circuit 80.

In step S803, the controller 5 calculates the reference number of times Nth based on a property of the refrigerant circuit 80.

In step S804, if Nt < Nth, the process proceeds to step S805; and if Nt ≥ Nth, the process proceeds to step S806.

In step S805, the controller 5 continues counting the number of start/stop times Nt.

In step S806, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

In step S807, the controller 5 counts the oil recovery operation time Tot of the refrigerant circuit 80.

In step S808, the controller 5 calculates the oil return time To.

In step S809, if Tot < To, the process returns to step S808; and if Tot ≥ To, the process proceeds to step S810.

In step S810, the controller 5 terminates the oil recovery operation of the refrigerant circuit 80.

As described above, according to the present embodiment, the oil recovery operation may be terminated at an appropriate timing based on the oil return time during the oil recovery operation of the refrigerant circuit 80 according to the second embodiment, which makes it possible to improve the comfort provided by the refrigeration cycle apparatus and the performance of the compressor.

In the above embodiment, in step S803, the controller 5 determines the reference number of times Nth based on a property of the refrigerant circuit 80, but it is not limited thereto. The controller 5 may set the reference number Nth to a predetermined value irrespective of a property of the refrigerant circuit 80.

Seventh Embodiment

In the present embodiment, the controller 5 controls the refrigerant circuit 80 to perform an oil recovery operation when the total operation time Tt of the compressor 1 during the normal operation of the refrigerant circuit 80 is longer than the reference time Tth determined in accordance with a property of the refrigerant circuit 80 and an amount of oil Om in the compressor 1 is equal to or smaller than a first prescribed value Oth.

The controller 5 resets the total operation time Tt to 0 when the total operation time Tt of the compressor 1 during the normal operation of the refrigerant circuit 80 is longer than the reference time Tth determined in accordance with a property of the refrigerant circuit 80 and the amount of oil Om in the compressor 1 is greater than the first prescribed value Oth.

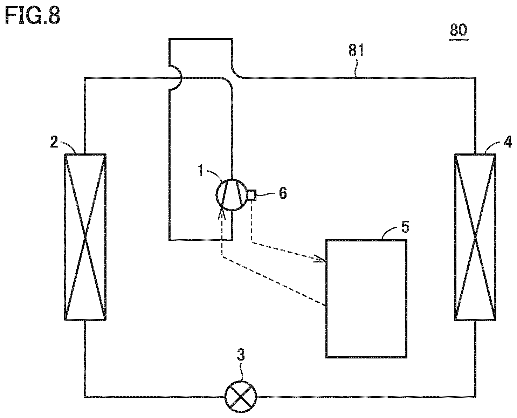

Fig. 8 is a diagram illustrating a configuration of a refrigeration cycle apparatus according to a seventh embodiment.

The refrigeration cycle apparatus includes an oil depletion sensor 6. The oil depletion sensor 6 detects the amount of oil in the compressor 1. The oil depletion sensor 6 may be a liquid level sensor or an oil concentration sensor.

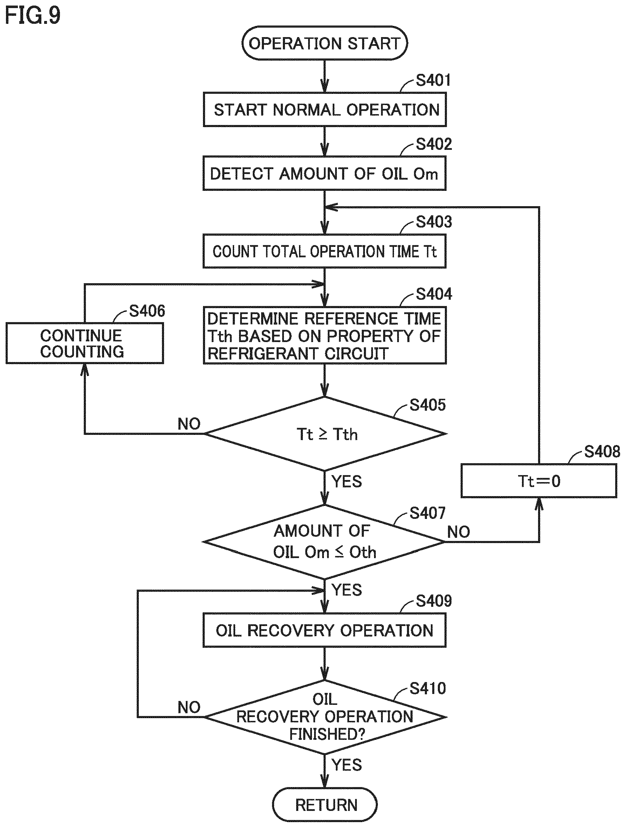

Fig. 9 is a flowchart illustrating a control process of the refrigeration cycle apparatus according to a seventh embodiment.

In step S401, the controller 5 starts a normal operation of the refrigerant circuit 80.

In step S402, the controller 5 detects the amount of oil Om in accordance with a signal from the oil depletion sensor 6.

In step S403, the controller 5 counts the total operation time Tt of the compressor 1 from the start of the normal operation of the refrigerant circuit 80.

In step S404, the controller 5 calculates the reference time Tth based on a property of the refrigerant circuit 80.

In step S405, if Tt < Tth, the process proceeds to step S406; and if Tt ≥ Tth, the process proceeds to step S407.

In step S406, the controller 5 continues counting the total operation time Tt.

In step S407, if the amount of oil Om is equal to or smaller than the first prescribed value Oth, the process proceeds to step S409; and if the amount of oil Om is greater than the first prescribed value Oth, the process proceeds to step S408.

In step S408, the controller 5 resets the total operation time Tt to 0.

In step S409, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

In step S410, when the oil recovery operation of the refrigerant circuit 80 is finished, the process is ended.

As described above, according to the present embodiment, when the necessity of the oil recovery operation is low (for example, when the refrigerant pipe 81 is short, the total operation time of the compressor 1 is small, or the amount of oil in the compressor 1 is great), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long, the total operation time of the compressor 1 is great, and the amount of oil in the compressor 1 is small), the oil recovery operation is performed, which makes it possible to improve the reliability of the compressor 1.

In the above embodiment, in step S404, the controller 5 determines the reference time Tth based on a property of the refrigerant circuit 80, but it is not limited thereto. The controller 5 may set the reference time Tth to a predetermined value irrespective of a property of the refrigerant circuit 80.

Eighth Embodiment

In the present embodiment, the controller 5 controls the refrigerant circuit 80 to perform an oil recovery operation when the number of start/stop times Nt of the compressor 1 during the normal operation of the refrigerant circuit 80 is greater than the reference number of times Nth determined in accordance with a property of the refrigerant circuit 80 and the amount of oil Om in the compressor 1 is equal to or smaller than the first prescribed value Oth.

The controller 5 resets the number of start/stop times Nt to 0 when the number of start/stop times Nt of the compressor 1 during the normal operation of the refrigerant circuit 80 is greater than the reference number of times Nth determined in accordance with a property of the refrigerant circuit 80 and the amount of oil Om in the compressor 1 is greater than the first prescribed value Oth.

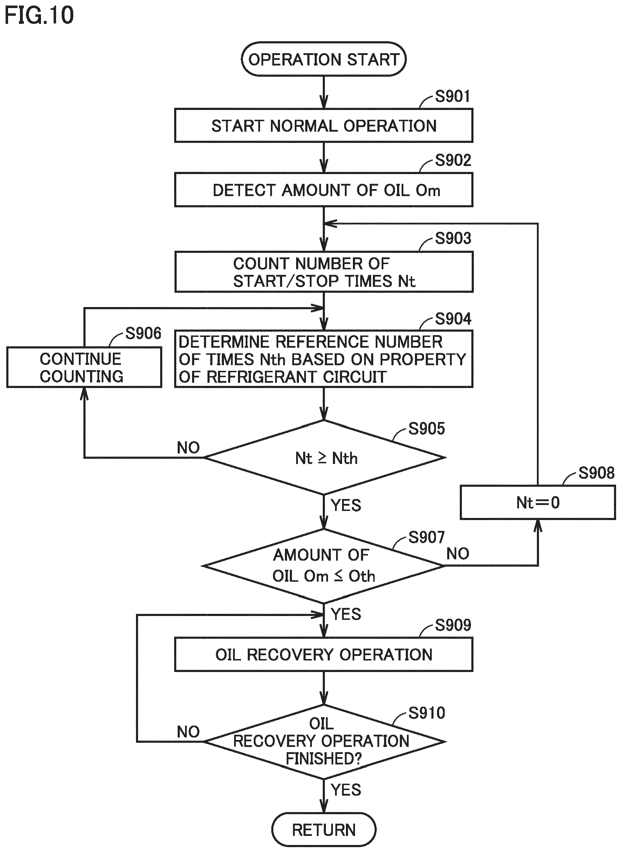

Fig. 10 is a flowchart illustrating a control process of the refrigeration cycle apparatus according to an eighth embodiment.

In step S901, the controller 5 starts a normal operation of the refrigerant circuit 80.

In step S902, the controller 5 detects the amount of oil Om in accordance with a signal from the oil depletion sensor 6.

In step S903, the controller 5 counts the number of start/stop times Nt of the compressor 1 from the start of the normal operation of the refrigerant circuit 80.

In step S904, the controller 5 calculates the reference number of times Nth based on a property of the refrigerant circuit 80.

In step S905, if Nt < Nth, the process proceeds to step S906; and if Nt ≥ Nth, the process proceeds to step S907.

In step S906, the controller 5 continues counting the number of start/stop times Nt.

In step S907, if the amount of oil Om is equal to or smaller than the first prescribed value Oth, the process proceeds to step S909; and if the amount of oil Om is greater the first prescribed value Oth, the process proceeds to step S908.

In step S908, the controller 5 resets the number of start/stop times Nt to 0.

In step S909, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

When the oil recovery operation of the refrigerant circuit 80 is finished in step S910, the process is ended.

As described above, according to the present embodiment, when the necessity of the oil recovery operation is low (for example, when the refrigerant pipe 81 is short, the number of start/stop times of the compressor 1 is small, or the amount of oil in the compressor 1 is great), the oil recovery operation is not performed, which makes it possible to prevent the comfort provided by the refrigeration cycle apparatus from being deteriorated. According to the present embodiment, when the necessity of the oil recovery operation is high (for example, when the length of the refrigerant pipe 81 is long, the number of start/stop times of the compressor 1 is great, and the amount of oil in the compressor 1 is small), the oil recovery operation is performed, which makes it possible to improve the reliability of the compressor 1.

In the above embodiment, in step S904, the controller 5 determines the reference number of times Nth based on a property of the refrigerant circuit 80, but it is not limited thereto. The controller 5 may set the reference number Nth to a predetermined value irrespective of a property of the refrigerant circuit 80.

Ninth Embodiment

In the present embodiment, the controller 5 terminates the oil recovery operation of the refrigerant circuit 80 when the amount of oil Om in the compressor 1 is equal to or greater than the first prescribed value Oth during the oil recovery operation of the refrigerant circuit 80 according to the first embodiment.

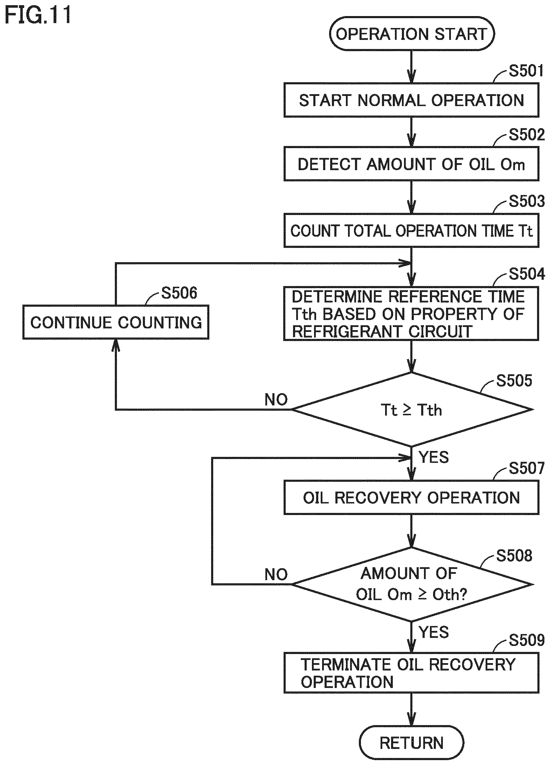

Fig. 11 is a flowchart illustrating a control process of the refrigeration cycle apparatus according to the ninth embodiment.

In step S501, the controller 5 starts a normal operation of the refrigerant circuit 80.

In step S502, the controller 5 detects the amount of oil Om in accordance with a signal from the oil depletion sensor 6.

In step S503, the controller 5 counts the total operation time Tt of the compressor 1 from the start of the normal operation of the refrigerant circuit 80.

In step S504, the controller 5 calculates the reference time Tth based on a property of the refrigerant circuit 80.

In step S505, if Tt < Tth, the process proceeds to step S506; and if Tt ≥ Tth, the process proceeds to step S507.

In step S506, the controller 5 continues counting the total operation time Tt.

In step S507, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

In step S508, if the amount of oil Om is equal to or greater than the first prescribed value Oth, the process proceeds to step S509; and if the amount of oil Om is smaller than the first prescribed value Oth, the process returns to step S507.

In step S509, the controller 5 terminates the oil recovery operation of the refrigerant circuit 80.

As described above, according to the present embodiment, the oil recovery operation may be terminated at an appropriate timing based on the amount of oil in the compressor detected during the oil recovery operation of the refrigerant circuit 80 according to the first embodiment, which makes it possible to improve the comfort provided by the refrigeration cycle apparatus and the performance of the compressor.

In the above embodiment, in step S504, the controller 5 determines the reference time Tth based on a property of the refrigerant circuit 80, but it is not limited thereto. The controller 5 may set the reference time Tth to a predetermined value irrespective of a property of the refrigerant circuit 80.

Tenth Embodiment

In the present embodiment, the controller 5 terminates the oil recovery operation of the refrigerant circuit 80 when the amount of oil Om in the compressor 1 is equal to or greater than the first prescribed value Oth during the oil recovery operation of the refrigerant circuit 80 according to the second embodiment.

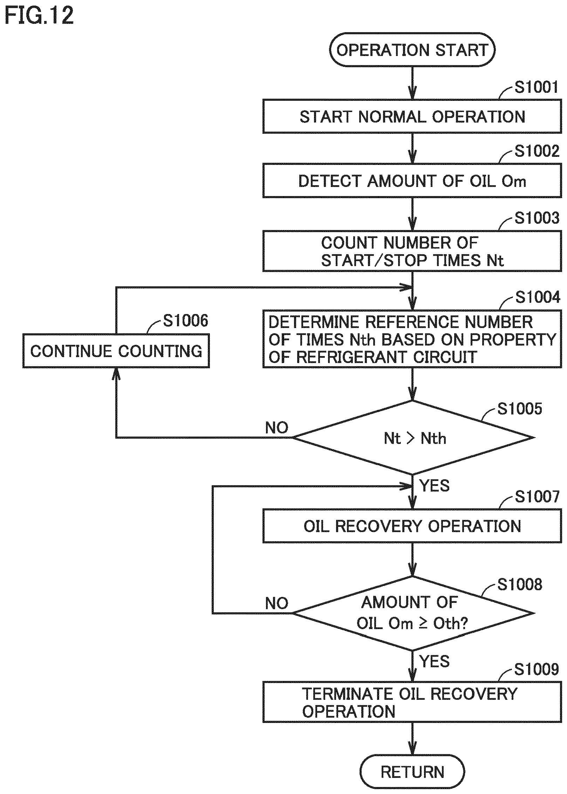

Fig. 12 is a flowchart illustrating a control process of the refrigeration cycle apparatus according to a tenth embodiment.

In step S1001, the controller 5 starts a normal operation of the refrigerant circuit 80.

In step S1002, the controller 5 detects the amount of oil Om in accordance with the signal from the oil depletion sensor 6.

In step S1003, the controller 5 counts the number of start/stop times Nt of the compressor 1 from the start of the normal operation of the refrigerant circuit 80.

In step S1004, the controller 5 calculates the reference number of times Nth based on a property of the refrigerant circuit 80.

In step S1005, if Nt < Nth, the process proceeds to step S1006; and if Nt ≥ Nth, the process proceeds to step S1007.

In step S1006, the controller 5 continues counting the number of start/stop times Nt.

In step S1007, the controller 5 controls the refrigerant circuit 80 to perform an oil recovery operation. In the oil recovery operation, for example, the controller 5 increases the number of revolutions of the compressor 1. Accordingly, the amount of oil flowing out from each component of the refrigerant circuit 80 increases, and thereby, the amount of oil flowing into the compressor 1 (the oil return amount) increases.

If the amount of oil Om is equal to or greater than the first prescribed value Oth in step S1008, the process proceeds to step S1009; and if the amount of oil Om is smaller than the first prescribed value Oth, the process returns to step S1007.

In step S1009, the controller 5 terminates the oil recovery operation of the refrigerant circuit 80.

As described above, according to the present embodiment, the oil recovery operation may be terminated at an appropriate timing based on the amount of oil in the compressor detected during the oil recovery operation of the refrigerant circuit 80 according to the second embodiment, which makes it possible to improve the comfort provided by the refrigeration cycle apparatus and the performance of the compressor.

In the above embodiment, in step S1004, the controller 5 determines the reference number of times Nth based on a property of the refrigerant circuit 80, but it is not limited thereto. The controller 5 may set the reference number Nth to a predetermined value irrespective of a property of the refrigerant circuit 80.

It should be understood that the embodiment disclosed herein is merely by way of illustration and example but not limited in all aspects. The scope of the present invention is defined by the terms of the claims, rather than the description above, and is intended to include any modifications within the meaning and scope equivalent to the terms of the claims.

REFERENCE SIGNS LIST

1: compressor; 2: high-pressure side heat exchanger; 3: decompressor; 4: low-pressure side heat exchanger; 5: controller; 6: oil depletion sensor; 80: refrigerant circuit; 81: refrigerant pipe

**Claims**

1. A refrigeration cycle apparatus comprising:

   a refrigerant circuit including a compressor, a high-pressure side heat exchanger, a decompressor, and a low-pressure side heat exchanger, which are annularly connected by a refrigerant pipe, and the refrigerant circuit being configured to circulate refrigerant,
   the refrigerant circuit being configured to perform an oil recovery operation based on an operation history of the compressor during a normal operation of the refrigerant circuit and a property of the refrigerant circuit,
   the property of the refrigerant circuit including at least one selected from the group of a length of the refrigerant pipe, a height difference of the refrigerant pipe, and an outside air temperature.

2. The refrigeration cycle apparatus according to claim 1, wherein
   when a total operation time of the compressor during the normal operation of the refrigerant circuit is longer than a reference time determined in accordance with a property of the refrigerant circuit, the refrigerant circuit performs the oil recovery operation.

3. The refrigeration cycle apparatus according to claim 1, wherein
   when the number of start/stop times of the compressor during the normal operation of the refrigerant circuit is greater than a reference number of times determined in accordance with a property of the refrigerant circuit, the refrigerant circuit performs the oil recovery operation.

4. The refrigeration cycle apparatus according to claim 1, wherein
   when an oil recovery operation time is equal to or longer than an oil return time for the oil discharged from the compressor to return to the compressor during the oil recovery operation of the refrigerant circuit, the refrigerant circuit terminates the oil recovery operation.

5. The refrigeration cycle apparatus according to claim 1 further including a sensor which detects an amount of oil in the compressor, wherein
   when a total operation time of the compressor during the normal operation of the refrigerant circuit is longer than a reference time determined in accordance with a property of the refrigerant circuit and the amount of oil in the compressor is equal to or smaller than a first prescribed value, the refrigerant circuit performs the oil recovery operation.

6. The refrigeration cycle apparatus according to claim 5, wherein
   when the total operation time of the compressor during the normal operation of the refrigerant circuit is longer than the reference time determined in accordance with a property of the refrigerant circuit and the amount of oil in the compressor is greater than the first prescribed value, the total operation time is reset.

7. The refrigeration cycle apparatus according to claim 1 further including a sensor which detects an amount of oil in the compressor, wherein
   when the number of start/stop times of the compressor during the normal operation of the refrigerant circuit is greater than a reference number of times determined in accordance with a property of the refrigerant circuit and the amount of oil in the compressor is equal to or smaller than a first prescribed value, the refrigerant circuit performs the oil recovery operation.

8. The refrigeration cycle apparatus according to claim 7, wherein
   when the number of start/stop times of the compressor during the normal operation of the refrigerant circuit is greater than the reference number of times determined in accordance with a property of the refrigerant circuit and the amount of oil in the compressor is greater than the first prescribed value, the number of start/stop times is reset.

9. The refrigeration cycle apparatus according to claim 1, wherein
when one cycle time from the start to the stop of the compressor is shorter than an oil return time for the oil discharged from the compressor to return to the compressor, and a total operation time of the compressor during the normal operation of the refrigerant circuit is longer than a reference time determined in accordance with a property of the refrigerant circuit, the refrigerant circuit performs the oil recovery operation.

10. The refrigeration cycle apparatus according to claim 9, wherein
when the one cycle time is equal to or longer than the oil return time, the total operation time is reset.

11. The refrigeration cycle apparatus according to claim 1, wherein
when one cycle time from the start to the stop of the compressor is shorter than an oil return time for the oil discharged from the compressor to return to the compressor and the number of start/stop times of the compressor during the normal operation of the refrigerant circuit is greater than a reference number of times determined in accordance with a property of the refrigerant circuit, the refrigerant circuit performs the oil recovery operation.

12. The refrigeration cycle apparatus according to claim 11, wherein
when the one cycle time is equal to or longer than the oil return time, the number of start/stop times is reset.

13. The refrigeration cycle apparatus according to claim 2, wherein

the reference time is smaller as the refrigerant pipe becomes longer,
the reference time is smaller as the height difference becomes greater, and
the reference time is smaller as the outside air temperature becomes lower.

14. The refrigeration cycle apparatus according to claim 3, wherein

the reference number of times is smaller as the refrigerant pipe becomes longer,
the reference number of times is smaller as the height difference becomes greater, and
the reference number of times is smaller as the outside air temperature becomes lower.

FIG.1

## FIG.2

```
        ( OPERATION START )
                  |
                  v              S101
        [ START NORMAL OPERATION ]
                  |
                  v              S102
        [ COUNT TOTAL OPERATION TIME Tt ]
                  |
                  v              S103
        [ DETERMINE REFERENCE TIME Tth
          BASED ON PROPERTY OF
          REFRIGERANT CIRCUIT ]
                  |
                  v              S104
    NO <  Tt ≥ Tth  >
                  | YES
                  v              S106
        [ OIL RECOVERY OPERATION ]
                  |
                  v              S107
    NO <  OIL RECOVERY OPERATION FINISHED?  >
                  | YES
                  v
              ( RETURN )

        [ CONTINUE COUNTING ]   S105
```

FIG.3

```
                              ( OPERATION START )
                                      |
                                      v            ⌒S601
                        ┌─────────────────────────────┐
                        │   START NORMAL OPERATION     │
                        └─────────────────────────────┘
                                      |
                                      v            ⌒S602
                        ┌─────────────────────────────┐
                        │      COUNT NUMBER OF         │
                        │    START/STOP TIMES Nt       │
                        └─────────────────────────────┘
                                      |
        ┌─────────────────────────────┘
        │                             v            ⌒S603
        │       ⌒S605      ┌─────────────────────────────┐
  ┌──────────────────┐     │ DETERMINE REFERENCE NUMBER   │
  │ CONTINUE COUNTING │    │ OF TIMES Nth BASED ON PROPERTY│
  └──────────────────┘     │ OF REFRIGERANT CIRCUIT       │
        ^                   └─────────────────────────────┘
        │                             |
        │                             v            ⌒S604
        │               NO      ╱─────────────╲
        └──────────────────────<   Nt ≥ Nth     >
                                ╲─────────────╱
                                      | YES
                                      v            ⌒S606
                        ┌─────────────────────────────┐
                        │    OIL RECOVERY OPERATION    │
                        └─────────────────────────────┘
                                      |
                                      v            ⌒S607
                 NO            ╱─────────────╲
        ┌───────────────────<      OIL        >
        │                     ╲ RECOVERY OPERATION╱
        │                      ╲  FINISHED?    ╱
        │                       ╲─────────────╱
        │                             | YES
        │                             v
        │                        ( RETURN )
        └─────────────────────────────
```

**FIG.4**

```
        ( OPERATION START )
                 │
                 │              ⌐S201
     ┌───────────────────────────┐
     │   START NORMAL OPERATION   │
     └───────────────────────────┘
                 │              ⌐S202
     ┌───────────────────────────┐
     │ COUNT TOTAL OPERATION TIME Tt │
     └───────────────────────────┘
                 │              ⌐S203
     ┌───────────────────────────┐
     │ DETERMINE REFERENCE TIME    │
     │ Tth BASED ON PROPERTY OF    │
     │ REFRIGERANT CIRCUIT         │
     └───────────────────────────┘
                 │              ⌐S204
       NO  ◇ COMPRESSOR ◇
           │   STARTED?   │
                 │ YES          ⌐S205
     ┌───────────────────────────┐
     │    COUNT CYCLE TIME Tc     │
     └───────────────────────────┘
                 │              ⌐S206
     ┌───────────────────────────┐
     │ CALCULATE OIL RETURN TIME To │
     └───────────────────────────┘
                 │              ⌐S207
            ◇ COMPRESSOR ◇   NO
            │  STOPPED?   │
                 │ YES
  ⌐S209
┌────────┐  NO  ◇ Tc<To ◇  ⌐S208
│ Tt=0   │
└────────┘        │ YES
                                    ⌐S211
            ◇ Tt ≥ Tth ◇  NO  ┌──────────┐
              ⌐S210            │ CONTINUE │
                 │ YES         │ COUNTING │
                              └──────────┘
     ┌───────────────────────────┐     ⌐S212
     │   OIL RECOVERY OPERATION   │
     └───────────────────────────┘
                 │              ⌐S213
     NO   ◇ OIL RECOVERY ◇
          │ OPERATION    │
          │ FINISHED?    │
                 │ YES
            ( RETURN )
```

EP 3 933 296 A1

FIG.5

```
                    ┌──────────────────┐
                    │ OPERATION START  │
                    └──────────────────┘
                             │
                             ▼              ⌐S701
               ┌──────────────────────────┐
               │   START NORMAL OPERATION  │
               └──────────────────────────┘
                             │
                             ▼              ⌐S702
               ┌──────────────────────────┐
               │     COUNT NUMBER OF       │
               │   START/STOP TIMES Nt     │
               └──────────────────────────┘
                             │              ⌐S703
               ┌──────────────────────────────────┐
               │ DETERMINE REFERENCE NUMBER        │
               │ OF TIMES Nth BASED ON PROPERTY    │
               │ OF REFRIGERANT CIRCUIT            │
               └──────────────────────────────────┘
```

S704 COMPRESSOR STARTED? — NO / YES

S705 COUNT CYCLE TIME Tc

S706 CALCULATE OIL RETURN TIME To

S707 COMPRESSOR STOPPED? — NO / YES

S709 Nt＝0

S708 Tc＜To — NO / YES

S711 CONTINUE COUNTING

S710 Nt ≧ Nth — NO / YES

S712 OIL RECOVERY OPERATION

S713 OIL RECOVERY OPERATION FINISHED? — NO / YES

RETURN

## FIG.6

```
           ( OPERATION START )
                    │
                    ▼                    S301
        ┌──────────────────────────┐
        │   START NORMAL OPERATION │
        └──────────────────────────┘
                    │
                    ▼                    S302
        ┌──────────────────────────┐
        │ COUNT TOTAL OPERATION TIME Tt │
        └──────────────────────────┘
                    │
    ┌───────────────┤
    │               ▼                    S303
    │   ┌──────────────────────────────┐
    │   │ DETERMINE REFERENCE TIME Tth │
    │   │ BASED ON PROPERTY OF         │
    │   │ REFRIGERANT CIRCUIT          │
    │   └──────────────────────────────┘
    │               │
S305│               ▼          S304
┌─────────────┐     ◇
│  CONTINUE   │ NO ╱   ╲
│  COUNTING   │◄──  Tt ≥ Tth
└─────────────┘    ╲   ╱
    ▲               ◇
    │               │ YES
    │               ▼                    S306
    │   ┌──────────────────────────┐
    │   │   OIL RECOVERY OPERATION │
    │   └──────────────────────────┘
    │               │
    │               ▼                    S307
    │   ┌──────────────────────────┐
    │   │   COUNT OIL RECOVERY      │
    │   │   OPERATION TIME Tot      │
    │   └──────────────────────────┘
    │               │
    ┌───────────────┤
    │               ▼                    S308
    │   ┌──────────────────────────┐
    │   │ CALCULATE OIL RETURN TIME To │
    │   └──────────────────────────┘
    │               │
    │               ▼          S309
    │               ◇
    │         NO  ╱   ╲
    └───────────  Tot ≥ To
                 ╲   ╱
                  ◇
                  │ YES
                  ▼                      S310
        ┌──────────────────────────────┐
        │ TERMINATE OIL RECOVERY OPERATION │
        └──────────────────────────────┘
                  │
                  ▼
              ( RETURN )
```

FIG.7

```
                              ┌─────────────────┐
                              │ OPERATION START │
                              └─────────────────┘
                                       │
                                       ▼                    ⌐S801
                          ┌──────────────────────────┐
                          │   START NORMAL OPERATION  │
                          └──────────────────────────┘
                                       │
                                       ▼                    ⌐S802
                          ┌──────────────────────────┐
                          │      COUNT NUMBER OF      │
                          │    START/STOP TIMES Nt    │
                          └──────────────────────────┘
                                       │
                                       ▼                    ⌐S803
                          ┌──────────────────────────┐
      ⌐S805              │ DETERMINE REFERENCE NUMBER │
┌──────────────────┐     │ OF TIMES Nth BASED ON PROPERTY│
│ CONTINUE COUNTING│     │   OF REFRIGERANT CIRCUIT   │
└──────────────────┘     └──────────────────────────┘
         ▲                            │
         │                            ▼              ⌐S804
         │            NO       ◇─────────────────◇
         └─────────────────────     Nt ≥ Nth
                                ◇─────────────────◇
                                          │ YES
                                          ▼              ⌐S806
                              ┌──────────────────────────┐
                              │   OIL RECOVERY OPERATION  │
                              └──────────────────────────┘
                                          │
                                          ▼              ⌐S807
                              ┌──────────────────────────┐
                              │     COUNT OIL RECOVERY    │
                              │    OPERATION TIME Tot     │
                              └──────────────────────────┘
                                          │
                                          ▼              ⌐S808
                              ┌──────────────────────────┐
                              │  CALCULATE OIL RETURN TIME To │
                              └──────────────────────────┘
                                          │
                                          ▼              ⌐S809
                          NO       ◇─────────────────◇
                ┌──────────────────     Tot＞To
                │                 ◇─────────────────◇
                │                           │ YES
                │                           ▼              ⌐S810
                │               ┌──────────────────────────┐
                │               │ TERMINATE OIL RECOVERY OPERATION │
                │               └──────────────────────────┘
                │                           │
                │                           ▼
                │                    ┌─────────────┐
                │                    │   RETURN    │
                │                    └─────────────┘
```

FIG.8

## FIG.9

OPERATION START

S401
START NORMAL OPERATION

S402
DETECT AMOUNT OF OIL Om

S403
COUNT TOTAL OPERATION TIME Tt

S404
DETERMINE REFERENCE TIME Tth BASED ON PROPERTY OF REFRIGERANT CIRCUIT

S405
$Tt \geq Tth$

NO → S406 CONTINUE COUNTING

YES

S407
AMOUNT OF OIL $Om \leq Oth$

NO → S408 $Tt=0$

YES

S409
OIL RECOVERY OPERATION

S410
OIL RECOVERY OPERATION FINISHED?

NO

YES

RETURN

## FIG.10

```
        ( OPERATION START )
                 │
                 ▼                    ⌐S901
        ┌─────────────────────────┐
        │  START NORMAL OPERATION  │
        └─────────────────────────┘
                 │
                 ▼                    ⌐S902
        ┌─────────────────────────┐
        │  DETECT AMOUNT OF OIL Om │
        └─────────────────────────┘
                 │
                 ▼                    ⌐S903
        ┌─────────────────────────┐
        │    COUNT NUMBER OF       │
        │   START/STOP TIMES Nt    │
        └─────────────────────────┘
                 │
  ⌐S906          ▼                    ⌐S904
┌──────────┐  ┌──────────────────────────────┐
│ CONTINUE │  │ DETERMINE REFERENCE NUMBER   │
│ COUNTING │  │ OF TIMES Nth BASED ON PROPERTY│
└──────────┘  │ OF REFRIGERANT CIRCUIT       │
              └──────────────────────────────┘
                 │
                 ▼                    ⌐S905
          NO  ◇───────────◇
         ◄────│  Nt ≥ Nth  │
              ◇───────────◇
                 │ YES                  ⌐S908
                 ▼                  ┌─────────┐
                                    │  Nt＝0   │
          NO  ◇───────────◇         └─────────┘
         ◄────│ AMOUNT OF │ NO         ▲
              │ OIL Om ≤ Oth├──────────┘
              ◇───────────◇
                 │ YES                ⌐S909
                 ▼
        ┌─────────────────────────┐
        │  OIL RECOVERY OPERATION  │
        └─────────────────────────┘
                 │
                 ▼                    ⌐S910
          NO  ◇───────────◇
         ◄────│    OIL     │
              │ RECOVERY OPERATION │
              │  FINISHED? │
              ◇───────────◇
                 │ YES
                 ▼
            ( RETURN )
```

## FIG.11

```
        ( OPERATION START )
                 │
                 ▼                    S501
   ┌──────────────────────────────┐
   │    START NORMAL OPERATION     │
   └──────────────────────────────┘
                 │
                 ▼                    S502
   ┌──────────────────────────────┐
   │   DETECT AMOUNT OF OIL Om     │
   └──────────────────────────────┘
                 │
                 ▼                    S503
   ┌──────────────────────────────┐
   │  COUNT TOTAL OPERATION TIME Tt│
   └──────────────────────────────┘
                 │
                 ▼                    S504
   ┌──────────────────────────────┐
   │  DETERMINE REFERENCE TIME     │
   │  Tth BASED ON PROPERTY OF     │
   │  REFRIGERANT CIRCUIT          │
   └──────────────────────────────┘
                 │
                 ▼                    S505
            ◇ Tt ≥ Tth ◇  ── NO ──►  CONTINUE COUNTING (S506)
                 │ YES
                 ▼                    S507
   ┌──────────────────────────────┐
   │     OIL RECOVERY OPERATION    │
   └──────────────────────────────┘
                 │
                 ▼                    S508
      ◇ AMOUNT OF OIL Om ≥ Oth? ◇  ── NO ──►
                 │ YES
                 ▼                    S509
   ┌──────────────────────────────┐
   │  TERMINATE OIL RECOVERY       │
   │  OPERATION                    │
   └──────────────────────────────┘
                 │
                 ▼
            ( RETURN )
```

## FIG.12

```
                                    ( OPERATION START )
                                            │
                                            │  ╭S1001
                                            ▼
                              ┌─────────────────────────────┐
                              │   START NORMAL OPERATION     │
                              └─────────────────────────────┘
                                            │  ╭S1002
                                            ▼
                              ┌─────────────────────────────┐
                              │   DETECT AMOUNT OF OIL Om    │
                              └─────────────────────────────┘
                                            │  ╭S1003
                                            ▼
                              ┌─────────────────────────────┐
                              │      COUNT NUMBER OF         │
                              │    START/STOP TIMES Nt       │
                              └─────────────────────────────┘
                                            │  ╭S1004
                  ╭S1006                     ▼
    ┌──────────────────────┐   ┌─────────────────────────────┐
    │  CONTINUE COUNTING    │   │ DETERMINE REFERENCE NUMBER   │
    └──────────────────────┘   │ OF TIMES Nth BASED ON PROPERTY│
              ▲                 │ OF REFRIGERANT CIRCUIT        │
              │                 └─────────────────────────────┘
              │                            │  ╭S1005
              │          NO        ◇───────▼───────◇
              └──────────────────◇    Nt > Nth      ◇
                                   ◇───────────────◇
                                            │ YES
                                            │  ╭S1007
                                            ▼
                              ┌─────────────────────────────┐
                              │   OIL RECOVERY OPERATION     │
                              └─────────────────────────────┘
                                            │  ╭S1008
                          NO        ◇───────▼───────◇
                      ┌───────────◇    AMOUNT OF      ◇
                      │            ◇  OIL Om ≥ Oth?    ◇
                      │             ◇───────────────◇
                      │                     │ YES
                      │                     │  ╭S1009
                      │                     ▼
                      │       ┌─────────────────────────────┐
                      │       │  TERMINATE OIL RECOVERY      │
                      │       │  OPERATION                   │
                      │       └─────────────────────────────┘
                      │                     │
                      │                     ▼
                      │                ( RETURN )
```

$Nt > Nth$

$\text{OIL } Om \geq Oth?$

## INTERNATIONAL SEARCH REPORT

| International application No. |
| --- |
| PCT/JP2019/007914 |

A. CLASSIFICATION OF SUBJECT MATTER
Int. Cl. F25B1/00(2006.01)i

According to International Patent Classification (IPC) or to both national classification and IPC

B. FIELDS SEARCHED

Minimum documentation searched (classification system followed by classification symbols)
Int. Cl. F25B1/00

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2017/183068 A1 (MITSUBISHI ELECTRIC CORPORATION) 26 October 2017, paragraphs [0043]– [0050], [0072], [0077] & CN 108885028 A | 1-2, 13-14 |
| Y |  | 1-4, 13-14 |
| A |  | 5-12 |
| Y | JP 2016-194389 A (JOHNSON CONTROLS HITACHI AIR CONDITIONING TECH (HONGKONG) LTD.) 17 November 2016, paragraphs [0038]–[0056] (Family: none) | 1-4, 13-14 |
| A |  | 5-12 |
| Y | WO 2018/096655 A1 (MITSUBISHI ELECTRIC CORPORATION) 31 May 2018, paragraphs [0047], [0048] (Family: none) | 4 |
| A | JP 2003-106690 A (MITSUBISHI ELECTRIC CORPORATION) 09 April 2003, paragraph [0022] (Family: none) | 5-12 |

☒ Further documents are listed in the continuation of Box C.   ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07.05.2019 | 14.05.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/007914

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-44512 A (YANMAR CO., LTD.) 04 March 2013, paragraphs [0034]-[0038] (Family: none) | 5-12 |
| A | JP 2015-155775 A (MITSUBISHI HEAVY INDUSTRIES, LTD.) 27 August 2015, paragraph [0038] & WO 2015/125397 A1 & EP 3091310 A1, paragraphs [0045], [0046] & CN 105849475 A | 5-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016194389 A